(19) Europäisches Patentamt
European Patent Office
Office européen des brevets

(11) **EP 3 900 486 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **19839327.4**

(22) Anmeldetag: **20.12.2019**

(51) Internationale Patentklassifikation (IPC):
*H05B 6/78* (2006.01)     *B29C 35/10* (2006.01)

(52) Gemeinsame Patentklassifikation (CPC):
**H05B 6/78; B29C 35/10;** B29C 2035/0855

(86) Internationale Anmeldenummer:
**PCT/DE2019/101110**

(87) Internationale Veröffentlichungsnummer:
**WO 2020/125871 (25.06.2020 Gazette 2020/26)**

(54) **VERNETZUNGSVORRICHTUNG MIT MONOMODE-APPLIKATOR**

CROSS-LINKING APPARATUS WITH MONOMODE APPLICATOR

DISPOSITIF DE RÉTICULATION AVEC APPLICATEUR MONOMODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018 DE 102018133536**
**15.10.2019 DE 102019127805**

(43) Veröffentlichungstag der Anmeldung:
**27.10.2021 Patentblatt 2021/43**

(73) Patentinhaber: **Gerlach Maschinenbau GmbH**
**41334 Nettetal (DE)**

(72) Erfinder:
• **MÖCKEL, Jens**
**41334 Nettetal (DE)**
• **MALLAH, Marcel**
**31226 Peine (DE)**

(74) Vertreter: **Lenzing Gerber Stute**
**PartG von Patentanwälten m.b.B.**
**Bahnstraße 9**
**40212 Düsseldorf (DE)**

(56) Entgegenhaltungen:
EP-A2- 1 205 724        WO-A1-2018/133935
DE-A1- 2 846 610        FR-A1- 2 548 507
US-A1- 2013 270 747

**Beschreibung**

Die vorliegende Erfindung betrifft eine Vorrichtung zum Vernetzen von einem oder mehreren in einem Werkstück enthaltenen, insbesondere polaren, Werkstoffen, insbesondere von Kautschuk, mittels Mikrowellen, mit mindestens einer Mikrowellenquelle.

Derartige Vorrichtungen sind bekannt und werden beispielsweise zum Vulkanisieren von Gummiprofilen eingesetzt. Dabei ist üblicherweise eine längliche Kavität vorgesehen, die von dem Gummiprofil durchlaufen wird und in deren Verlauf das Gummiprofil mit verschiedenen Methoden erwärmt und in der Folge vulkanisiert wird. Neben der Erwärmung durch Heißluft und Infrarotstrahlung werden auch Mikrowellen in die Kavität eingespeist, die den Vorteil haben, dass sie das Profil durchdringen und von innen erwärmen, anstatt dass nur die Oberfläche erwärmt wird und die Wärme durch Wärmeleitung ins Innere des Werkstücks transportiert wird. Zum Einkoppeln der Mikrowellen in die Kavität sind üblicherweise Einkopplungsschlitze in einer Wandung der Kavität vorgesehen, wobei an der Außenseite der Wandung zum Zuführen der Mikrowellen zu den Einkopplungsschlitzen ein von einer Mikrowellenquelle gespeister Hohlleiter angeordnet ist. Innerhalb des Hohlleiters breiten sich die Mikrowellen auf definierte und von der Geometrie des Hohlleiters abhängige Weise aus und können mit Abstimmvorrichtungen derart angepasst werden, dass an einem Einkopplungsschlitz ein Energiedichtemaximum vorliegt, so dass ein möglichst großer Anteil der Mikrowellenenergie in die Kavität eingekoppelt wird. Gleichzeitig wird so der auf die Mikrowellenquelle reflektierte Anteil der Mikrowellenenergie geringgehalten, um diese nicht zu beschädigen.

In US 4,275,283 wird eine Vulkanisationsvorrichtung zum Erwärmen von Gummiprofilen mit UHF-Energie offenbart. Diese Vulkanisationsvorrichtung weist eine von dem Gummiprofil durchlaufene Kavität mit mehreren Einkopplungsschlitzen an sich jeweils gegenüberliegenden Enden der Kavität auf. Auf der Außenseite der Kavität ist ein Hohlwellenleiter angeordnet, der Mikrowellen von einer Mikrowellenquelle zu den Einkopplungsschlitzen leitet. An einem oberen Schenkel des Hohlwellenleiters ist eine Abstimmvorrichtung vorgesehen.

Einen anderen Ansatz der Zuleitung von Mikrowellen zum Werkstück wird bei dem aus JP 08108434 A bekannten Gegenstand verfolgt. Dort ist eine Vulkanisationsvorrichtung für Endloswerkstücke, insbesondere aus Schaumgummi, mit einem Innenraum offenbart, der Heißluft- und Mikrowellenbereiche aufweist. Die Mikrowellen werden dabei von Mikrowellenquellen erzeugt und in flexible Wellenleiter eingespeist, die durch den Innenraum unmittelbar an das Werkstück herangeführt sind. An ihren werkstückseitigen Enden weisen sie Auskopplungsöffnungen auf, so dass die Mikrowellen unmittelbar am Werkstück aus den Wellenleitern ausgekoppelt werden.

In FR 2 548 507 A1 ist ein Mikrowellenapplikator offenbart, der einen Resonanztunnel und eine Mikrowellenquelle zur Erzeugung von Mikrowellen umfasst, die über Kopplungsschlitze in den Resonanztunnel eingekoppelt werden können. Oberhalb der Kopplungsschlitze sind rechteckige Modenfilter vorgesehen, durch die Werkstücke hindurchführbar sind. Außerhalb der Modenfilter können sich die Mikrowellen unkontrolliert im Resonanztunnel ausbreiten.

EP 1 205 724 A2 offenbart eine Vorrichtung zum Trocknen und/oder Sintern von Presskörpern aus Verbundwerkstoffen. Dabei umfasst die Vorrichtung eine Vakuumkammer, in der ein Hohlraumresonator angeordnet ist, in den von einer Mikrowellenquelle erzeugte Mikrowellen eingekoppelt werden können. Die Presslinge können mittels einer Fördereinrichtung in den Hohlraumresonator ein- und ausgeführt werden.

Nachteilig bei sämtlichen aus dem vorgenannten Stand der Technik bekannten Gegenständen ist, dass die Mikrowellen sich in der Kavität oder dem Innenraum auf kaum zu kontrollierende Weise ausbreiten können, so dass ein großer Anteil der Mikrowellenenergie nicht zum zu vernetzenden Werkstoff gelangt. Zudem ist die Feldverteilung, insbesondere die Energiedichteverteilung des Mikrowellenfelds, und damit auch die Lage des Profils im Mikrowellenfeld nicht oder nur sehr begrenzt zu bestimmen, so dass es dem Zufall überlassen bleibt, ob das Profil einen Bereich mit ausreichend hoher Energiedichte durchläuft. Der tatsächlich vom Profil absorbierte Teil der Mikrowellenenergie in den vorbekannten Vorrichtungen beträgt daher nur etwa 20 %. Darüber hinaus können die Mikrowellen wegen der unkontrollierten Ausbreitung unerwünschten Einfluss auf andere Bauteile in oder an der Vorrichtung nehmen. So ist etwa bei mehreren in der Nähe voneinander angeordneten Mikrowellenquellen ein nachteiliger Übersprechungseffekt untereinander festzustellen. Außerdem müssen die Mikrowellen spätestens vor Austritt aus der Vorrichtung aufwändig absorbiert werden, um in der Umgebung der Vorrichtung keinen Schaden zu verursachen.

Die Aufgabe der vorliegenden Erfindung ist es, eine Vorrichtung nach oben genannter Art anzugeben, bei der mindestens einer dieser Nachteile nicht oder in geringerem Maße besteht.

Gelöst wird diese Aufgabe durch einen Gegenstand mit den Merkmalen des Anspruchs 1. Vorteilhafte Weiterbildungen der Erfindung sind in den Unteransprüchen angegeben.

Erfindungsgemäß weist die Vorrichtung einen Monomode-Applikator auf, in den Mikrowellen der Mikrowellenquelle eingekoppelt werden können, wobei der mindestens eine Monomode-Applikator eine erste Öffnung zum Ein- bzw. Ausbringen des Werkstücks aufweist. Ein Monomode-Applikator ist dabei ein Bauteil, in dem mindestens eine Mikrowelle als monomodale Welle ausbreitungsfähig ist, wie beispielsweise ein Hohlleiter, Bandleiter, Streifenleiter oder ein Hohlraumresonator. Ein Hohlleiter, Bandleiter oder Streifenleiter weist dabei eine Einkopplungsöffnung und eine weitere Öffnung als Auskopplungsöffnung für die Mikrowelle auf, wobei sich die Mikrowelle von der Einkopplungs- zur Auskopplungsöffnung ausbreitet.

Ein Hohlraumresonator weist demgegenüber lediglich eine solche Öffnung auf, durch die die Mikrowellen ein- und auch wieder ausgekoppelt werden. Dabei werden die Mikrowellen an einer üblicherweise der Öffnung gegenüberliegenden Wandung reflektiert, und die Länge des Resonators ist derart auf die Wellenlänge der monomodalen Mikrowellen abgestimmt, dass eine stehende Welle entsteht.

Das Querschnittsprofil des Monomode-Applikators kann im Prinzip beliebig gewählt werden, typischerweise ist es aber rechteckig oder rund. Die Ausbreitungsfähigkeit einer einzelnen Wellenmode bestimmt sich in erster Linie aus der Geometrie und insbesondere aus der Geometrie des Hohlquerschnitts des Monomode-Applikators. So ist eine Wellenmode dann ausbreitungsfähig, wenn die zu übertragende Wellenlänge kleiner als die zu der Mode gehörende Grenzwellenlänge $(\lambda_c)_{mn}$ für den jeweiligen Querschnitt ist. Die Grenzwellenlänge $(\lambda_c)_{mn}$ berechnet sich beispielsweise bei einem Rechteckhohlprofil mit der Höhe a und der Breite b zu

$$(\lambda_c)_{mn} = \frac{2}{\sqrt{\left(\frac{m}{a}\right)^2 + \left(\frac{n}{b}\right)^2}} \quad .$$

Für die in der Mikrowellentechnik bevorzugt benutzte Frequenz von f = 2,45 GHz ergibt sich über $(\lambda_c)_{mn} = c \div (f_c)_{mn}$ eine Grenzwellenlänge von 122,5 mm, wobei c die Lichtgeschwindigkeit von $3 \cdot 10^{11}$ mm/s ist. Für eine $H_{10}$-Welle beispielweise, bei der sich die Grenzwellenlänge mit m=1 und n=0 zu $(\lambda_c)_{10}=2a$ berechnet, ergibt sich somit eine Mindesthöhe für das Rechteckprofil von 61,25 mm. Die Breite des Profils spielt bei einer $H_{10}$-Welle keine Rolle. Es kann auch für jedes Querschnittsprofil eine Grenzfrequenz $(f_c)_{mn}$ für jede Wellenmode bei gegebener Geometrie berechnet werden, wobei die Arbeitsfrequenz dann höher liegen muss als diese Grenzfrequenz. Üblicherweise erfolgt die Berechnung über mathematische Simulationsprogramme.

Sofern in den Monomode-Applikator eine in ihren Eigenschaften bekannte Mikrowelle eingespeist wird, kann das entstehende Monomodenwellenfeld präzise berechnet bzw. bestimmt werden. Dadurch kann die Position des Werkstücks zu dem Mikrowellenfeld so bestimmt werden, dass das Werkstück im Bereich eines Wellenmaximums liegt bzw. den Monomode-Applikator im Bereich eines Wellenmaximums durchläuft und somit eine größtmögliche Energiemenge aus der Mikrowelle aufnehmen und zum Aufwärmen nutzen kann. Zudem kann das bekannte Mikrowellenfeld dafür genutzt werden, bei komplexen Geometrien eines Werkstücks durch dessen Ausrichtung zum Mikrowellenfeld einzelne Bereiche bevorzugt mit Mikrowellenenergie zu beaufschlagen und so beispielsweise bei der Vulkanisation eines Gummidichtungsprofils die Materialeigenschaften für spezielle Anwendungen selektiv einzustellen. Andererseits ist es bei Werkstücken mit ungleichmäßiger Materialverteilung auch möglich, alle Bereiche gleichermaßen stark zu erhitzen.

Mit derartigen Monomode-Applikatoren kann durch die gezielte Platzierung des Werkstücks im Mikrowellenfeld der von dem Werkstück aufgenommene Anteil der Energie der Mikrowelle gegenüber bekannten Vorrichtungen stark erhöht werden.

Darüber hinaus kann auch die Volumenleistungsdichte P des Wellenfelds stark gesteigert werden, da sich die gesamte Energie der Mikrowellenquelle in der Monomodewelle bündelt, so dass deren elektrische Feldstärke E steigt. Die Volumenleistungsdichte P in $W/m^3$ berechnet sich aus der elektrischen Feldstärke durch die folgende Formel:

$$P = 2\pi \bullet f \bullet \varepsilon_0 \bullet \varepsilon_r` \bullet \tan\delta \bullet E^2$$

Dabei ist f die Frequenz in Hz, $\varepsilon_0$ die elektrische Feldkonstante in As/Vm, $\varepsilon_r$' der Realteil der komplexen relativen Dielektrizitätskonstante, $\tan\delta$ der materialspezifische Verlustfaktor des polaren Werkstoffs und E die elektrische Feldstärke in V/m. Die Volumenleistungsdichte steigt hier deshalb stark mit der Feldstärke, da die Feldstärke quadratisch in die Berechnungsformel eingeht.

Durch die Verwendung des erfindungsgemäßen Monomode-Applikators kann so einerseits die energetische Gesamteffizienz der Vorrichtung gesteigert werden, wodurch Produktionsmittel eingespart werden. Andererseits ist auch der Anteil der aus dem Monomode-Applikator durch eine gegebenenfalls vorhandene Auskopplungsöffnung abgestrahlten Wellenenergie gering, so dass kleiner ausgelegte Absorber ausreichen, um diesen Wellenanteil abzufangen. Ein ganz wesentlicher Vorteil der Verwendung eines Monomode-Applikators besteht schließlich darin, dass aufgrund des sehr effizienten Einsatzes der eingespeisten Energie auch schwach und sehr schwach polare Werkstoffe mit den Mikrowellen aufgeheizt werden können, bis hin zu solchen Werkstoffen, die man üblicherweise nicht mehr als polar bezeichnen würde.

Der Monomode-Applikator ist so gestaltet, dass keine Mikrowellen unkontrolliert aus diesem austreten können und das entstehende Mikrowellenfeld sich nur in dem gut zu kontrollierenden Innenraum ausbreitet. Ein negativer Einfluss auf andere Bauteile der Vorrichtung entfällt. Der Monomode-Applikator ist dafür bevorzugt bis auf die mindestens eine Öffnung zum Ein- bzw. Ausbringen des Werkstücks und die Ein- und Auskopplungsöffnungen für die Mikrowellen geschlossen. Die mindestens eine Öffnung zum Ein- bzw. Ausbringen des Werkstücks kann zudem mit einer Dichtung versehen sein, um zu verhindern, dass Mikrowellen aus dem Monomode-Applikator gelangen.

Der Monomode-Applikator ist auf einen kontinuierlichen Betrieb ausgelegt und weist neben einer ersten Öffnung zum Einbringen des Werkstücks noch eine zweite Öffnung zum Herausführen des Werkstücks auf. Diese zweite Öffnung liegt der ersten Öffnung dann gegenüber, so dass etwa ein profilförmiges Endloswerkstück durch den Monomode-Applikator von der ersten zur zweiten Öffnung hindurchgeführt werden kann, wie dies auch bei aus dem Stand der Technik bekannten Kavitäten der Fall ist. Auf diese Weise werden etwa Gummidichtungen für Autotüren hergestellt.

Bei einer kontinuierlich betriebenen Vorrichtung mit einem Monomode-Applikator kann die Transportrichtung des Werkstücks quer oder parallel zur Ausbreitungsrichtung der Mikrowellen im Monomode-Applikator verlaufen. Im ersten Fall ist der Weg, den das Werkstück durch die Mikrowelle zurücklegt, zwar vergleichsweise kurz, dafür kann die Position des Werkstücks im Mikrowellenfeld jedoch gezielt gewählt werden und das Werkstück kann selektiv vernetzt werden, wenn es sich um eine stehende Welle handelt, etwa in einem Hohlraumresonator. Verläuft die Transportrichtung des Werkstücks parallel zur Ausbreitungsrichtung, so lassen sich mit einem Monomode-Applikator längere Wegstrecken abdecken, jedoch nimmt jeder Bereich des Werkstücks die gleiche Menge Mikrowellenenergie auf, da das Profil die Wellenmaxima und die Wellenminima nacheinander durchläuft.

Bei einem kontinuierlichen Prozess können auch mehrere Monomode-Applikatoren in der Vorrichtung in Transportrichtung des Werkstücks hintereinander angeordnet sein und vom Werkstück durchlaufen werden. So können etwa bestimmte Aufheizverläufe eingestellt werden oder unterschiedliche Bereiche eines Werkstücks nacheinander aufgeheizt werden, je nachdem wie das Werkstück in den einzelnen Monomode-Applikatoren zu dem jeweiligen Mikrowellenfeld ausgerichtet ist.

In einer bevorzugten Ausführungsform weist der mindestens eine Monomode-Applikator eine Messvorrichtung zum Messen der Energiedichte von in dem Monomode-Applikator reflektierten Mikrowellen und eine Abstimmvorrichtung zum Einstellen von Eigenschaften einer durch eine Mikrowellenquelle erzeugten Mikrowelle auf, wobei die Messvorrichtung und die Abstimmvorrichtung Bestandteile eines Regelkreises zum Einstellen einer minimalen Energiedichte der reflektierten Mikrowellen sind. So kann einerseits das Mikrowellenfeld dahingehend feinjustiert werden, dass eine maximale Energieaufnahme durch das Werkstück gegeben ist. Andererseits kann auch die Energiemenge, die bei einem Hohlraumresonator in Richtung der Mikrowellenquelle zurückreflektiert wird, minimiert werden, so dass möglichst wenig Energie an einem Absorber absorbiert werden muss.

Ein Monomode-Applikator kann auch mehrere Bereiche mit unterschiedlichen Geometrien aufweisen, wobei in mindestens zwei dieser Bereiche unterschiedliche monomodale Mikrowellen ausbreitungsfähig sind. So kann der Monomode-Applikator so gestaltet sein, dass das Werkstück diese Bereiche nacheinander durchläuft und somit innerhalb eines Monomode-Applikators verschiedenen Mikrowellenfeldern ausgesetzt ist. Auf diese Weise kann, wie mit hintereinander angeordneten Monomode-Applikatoren, das Aufheizverfahren gezielt gestaltet werden, oder unterschiedliche Bereiche des Werkstücks können nacheinander selektiv erwärmt werden, wobei nur ein einzelner Monomode-Applikator verbaut werden muss.

Neben dem mindestens einen Monomode-Applikator kann die Vorrichtung auch eine Kavität aufweisen, etwa wie sie von gattungsgemäßen Vorrichtungen vorbekannt ist. Insbesondere kann dies eine Heißgaskavität sein, in der das Profil von heißem Gas, insbesondere von heißer Luft, umströmt wird und so durch Konvektion aufgeheizt wird. Auch können in einer solchen Kavität Mittel zum Erzeugen von Infrarotstrahlung vorgesehen sein, mit der das Werkstück durch Strahlungswärme aufgeheizt wird. Erfindungsgemäße Monomode-Applikatoren können dann in der Kavität angeordnet sein, um eine kompakte Gesamtvorrichtung zu gestalten. Alternativ, beispielsweise um die Monomode-Applikatoren nicht den Temperaturen innerhalb der Kavität auszusetzen, können diese auch in Transportrichtung des Werkstücks vor und/oder hinter der Kavität angeordnet sein. Der mindestens eine Monomode-Applikator kann allerdings auch alleinstehend, ohne weitere Mittel zum Aufheizen des Werkstoffs, verwendet werden und die gesamte Vernetzung des in dem Werkstück enthaltenen Werkstoffs besorgen.

In einer bevorzugten Ausführungsform ist der mindestens eine Monomode-Applikator mehrteilig und die Teile können insbesondere zum Einführen oder Einlegen eines Werkstücks voneinander getrennt werden. So kann das Werkstück zu Beginn eines kontinuierlichen Prozesses in den Monomode-Applikator auf einfache Weise eingelegt werden, wenn die Trennebene die Öffnungen zum Ein- und Ausführen des Werkstücks schneidet. Auch ist der Innenraum des Monomode-Applikators so auf einfache Weise für Wartungsarbeiten zugänglich.

Sofern der mindestens eine Monomode-Applikator in einer Kavität angeordnet ist, die von einer Seite durch eine Klappe oder einen Deckel offenbar ist, kann einer der Teile des Monomode-Applikators mit dieser Klappe oder diesem Deckel verbunden sein. Besonders bevorzugt ist die Verbindung so gestaltet, dass beim Öffnen der Klappe oder des Deckels der Monomode-Applikator ebenfalls geöffnet wird und zwar so, dass das Werkstück in diesen eingelegt werden kann. So kann beim Öffnen der Kavität das Werkstück entlang der gesamten Bearbeitungsstrecke sowohl innerhalb des Applikators als auch außerhalb eingelegt werden.

Am Monomode-Applikator ist an der ersten und ggf. der zweiten Öffnung zum Ein- und Ausbringen des Werkstücks vorzugsweise eine Mikrowellenfalle vorgesehen, mit der verhindert werden soll, dass Mikrowellen aus dem Monomode-Applikator in seine Umgebung, insbesondere in die ihn umgebende Kavität, entweichen bzw. einkoppeln und dort möglicherweise Schäden verursachen, unerwünschte Einflüsse auf andere Bauteile ausüben, oder mit anderen Mikrowellen in der Kavität interferieren. Die Mikrowellenfalle kann beispielsweise als Hohlkörper, insbesondere als Rohr, ausgebildet sein, dessen Querschnitt und Länge so bemessen sind, dass die monomodale Mikrowelle nicht aus dem Monomode-Applikator in die Kavität bzw. seine Umgebung einkoppeln bzw. entweichen kann. Dabei muss der Hohlkörper nicht zwingend aus einem Leitermaterial bestehen. Es ist auch möglich, den Hohlkörper aus einem Material wie Teflon oder Siliziumcarbid, das Mikrowellen sehr gut absorbiert, auszubilden oder damit zu versehen. In einer bevorzugten Ausführungsform ist eine solche Mikrowellenfalle mit einem Teflon-Rohr ausgebildet, dass durch einen Hohlkörper aus einem leitenden Material geführt ist. Hier kann der Hohlkörper dazu dienen, Mikrowellen, die vom Absorptionsmaterial in der Mikrowellenfalle noch nicht vollständig absorbiert worden sind, in Richtung des Absorptionsmaterials zu reflektieren.

Es hat sich herausgestellt, dass es mit dem erfindungsgemäßen Monomode-Applikator möglich ist, eine Vielzahl von Elastomeren und nicht nur Gummi zu vernetzen, und zwar insbesondere solche Elastomere, die zum Vernetzen einer vergleichsweise hohen Energiezufuhr bedürfen, weil sie beispielsweise nur wenig Mikrowellenenergie aufnehmen und bislang nicht als für ein Vernetzen mit Mikrowellen geeignet angesehen wurden. Die erfindungsgemäße Vorrichtung ist insbesondere zum Vernetzen von Werkstoffen ausgewählt aus der Gruppe von Naturkautschuken, Polybutadienkautschuken, Styrol-Butadien-Kautschuken, Acrylnitril-Butadien-Kautschuken, Chloroprenkautschuken, Isoprenkautschuken, Butylkautschuken, Ethylen-Propylen-Kautschuken, Polysulfidkautschuken, Polyurethankautschuken, Fluorkautschuken, Chlorsulfonylpolyethylen-Kautschuken und Silikonkautschuken einschließlich kalt- und heißvernetzenden Silikonkautschuken sowie Flüssigsilikonkautschuk geeignet. Insbesondere für die letztgenannten Silikonkautschuke galt bislang, dass sie für ein Vernetzen mithilfe von Mikrowellen ungeeignet ist. Der Werkstoff muss nicht zwingend polar sein.

Im Folgenden wird die Erfindung anhand von Figuren, in denen bevorzugte Ausführungsbeispiele der Erfindung dargestellt sind, näher erläutert.

Es zeigen:

Fig. 1: eine Seitenansicht einer erfindungsgemäßen Vorrichtung, bei der ein Werkstück parallel zur Ausbreitungsrichtung der Mikrowellen in einem Hohlleiter geführt wird;

Fig. 2: eine Profilansicht eines Hohlleiters, der von einem profilartigen Werkstück durchlaufen wird mit eingezeichnetem E- und H-Feld;

Fig. 3: eine Seitenansicht einer erfindungsgemäßen Vorrichtung, bei der ein Werkstück quer zur Ausbreitungsrichtung der Mikrowellen durch mehrere Hohlraumresonatoren geführt wird;

Fig. 4: eine Seitenansicht einer Vorrichtung gemäß Figur 3, wobei die Hohlraumresonatoren zwei verschiedene Bereiche aufweisen;

Fig. 5: eine Seitenansicht einer Vorrichtung gemäß Figur 3 und 4, wobei die Hohlraumresonatoren drei verschiedene Bereiche aufweisen.

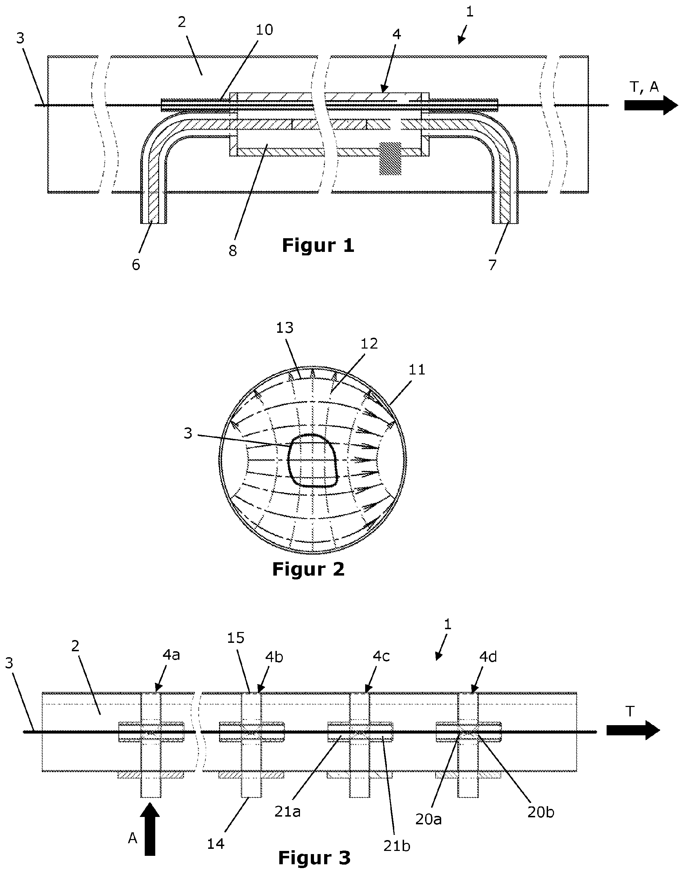

Figur 1 zeigt eine erfindungsgemäße Vorrichtung 1 mit einer Kavität 2, durch die ein Werkstück 3 in Form eines Endlosprofils hindurchgeführt ist. Innerhalb der Kavität 2 ist ein Monomode-Applikator 4 in Form eines Hohlwellenleiters angeordnet. Der Hohlwellenleiter umfasst dabei einen Zuleiter 6 und einen ausgangsseitigen Leiter 7, sowie einen Applikationsbereich 8, in dem sich die Mikrowellen parallel zur Transportrichtung T des Werkstücks 3 ausbreiten. Der Applikationsbereich 8 ist derart gestaltet, dass eine Monomodewelle in diesem ausbreitungsfähig ist und auf das Werkstück 3 wirken kann, sodass es erhitzt wird. Dabei bewegt sich sowohl das Werkstück 3 als auch die Monomodewelle in die Transportrichtung T des Werkstücks 3, wobei sich die Welle üblicherweise erheblich viel schneller als das Werkstück 3 durch den Applikator 8 bewegt. Im statistischen Mittel absorbiert jeder Teil des Werkstücks 3, sowohl in Längsrichtung betrachtet als auch im Profil betrachtet, die gleiche Menge an Wellenenergie und das Werkstück 3 wird gleichmäßig erhitzt.

Das Werkstück 3 ist in dem Ausführungsbeispiel gemäß Figur 1 in einem Arbeitsrohr 10 geführt, um es mechanisch zu schützen. Das Arbeitsrohr 10 ist aus einem für die Mikrowellen transparenten Material, wie etwa Teflon oder Quarzglas, gebildet und kann insofern ohne weiteres durch den Monomode-Applikator mit hindurchgeführt werden.

Figur 2 zeigt einen im Profil runden Hohlwellenleiter 11, durch den ein Werkstück 3 mittig in hier aus der Zeichnungsebene herausweisender Transportrichtung T hindurchgeführt ist. In dem Hohlwellenleiter 11 ist ebenfalls eine Monomodewelle ausgebildet, die sich in die gleiche Transportrichtung T wie das Werkstück 3 ausbreitet. Mit den von unten nach oben gerichteten Pfeilen ist der E-Feld-Anteil 12 des Mikrowellenfeldes dargestellt, wobei der Abstand der Pfeile zueinander die Energiedichte des Feldes anzeigt. Auf gleiche Weise ist mit von links nach rechts weisenden Pfeilen der H-Feld-Anteil 13 der Monomodewelle dargestellt. Es ist zu erkennen, dass sowohl die Energiedichte des E-Feld-Anteils als auch die des H-Feld-Anteils in dem Bereich maximal ist, in dem das Werkstück 3 durch das Mikrowellenfeld hindurchgeführt ist. Das Mikrowellenfeld bzw. die E- und H-Anteile 12, 13 des Mikrowellenfelds sind in einem erfindungsgemäßen Monomode-Applikator bekannt bzw. berechenbar. Daher kann das Werkstück 3 gezielt so in dem Mikrowellenfeld angeordnet oder dadurch hindurchgeführt werden, dass es eine maximal mögliche Energiemenge aus der Mikrowelle aufnimmt oder so, dass im Profil betrachtet einzelne Bereiche des Werkstücks 3 bevorzugt durch die Mikrowelle erhitzt werden.

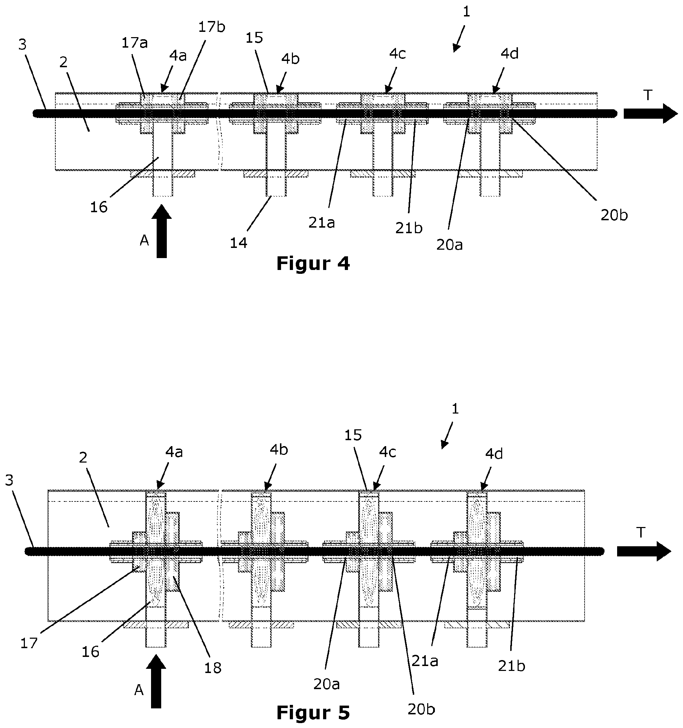

Die Figuren 3 bis 5 zeigen ebenfalls erfindungsgemäße Vorrichtungen 1 mit einer Kavität 2 sowie mit mehreren in der Kavität 2 angeordneten Monomode-Applikatoren 4a bis 4d, die von dem Werkstück 3 nacheinander durchlaufen werden. In den Figuren 3, 4 und 5 gezeigten Ausführungsformen durchläuft das Werkstück 3, dass sich in Transportrichtung T bewegt, die Monomode-Applikatoren quer zur Ausbreitungsrichtung A der Mikrowellen. Dabei sind die Monomode-Applikatoren 4a bis 4d Hohlraumresonatoren, die nur über eine einzelne Öffnung 14 zum Einkoppeln und Auskoppeln der Mikrowellen verfügen. Auf der der Öffnung 14 gegenüberliegenden Seite weisen die Monomode-Applikatoren 4a bis 4d Wandungen 15 auf, an denen die Mikrowellen reflektiert werden, so dass in den Hohlraumresonatoren stehende Wellen entstehen, wie sie in den Figuren 4 und 5 schematisch angedeutet sind.

Bei Monomode-Applikatoren 4a bis 4d, die Hohlraumresonatoren sind und bei denen das Werkstück 3 die Mikrowelle quer zur Ausbreitungsrichtung A durchläuft, ist die Energieverteilung des Mikrowellenfelds über das Profil des Werkstücks 3 jederzeit gleich. Je nach Verhältnis der Profilform und -abmessungen des Werkstücks 3 zu der Wellenlänge der stehenden Mikrowelle, kann das Profil dann besonders gleichmäßig oder gezielt selektiv erwärmt werden. Um bei komplexeren Profilformen des Werkstücks 3 eine gleichmäßige oder selektive Erwärmung zu gewährleisten, oder um eine bestimmte Heizfolge zu realisieren, können, wie in den Figuren 4 und 5 gezeigt, die Hohlraumresonatoren in mehrere Bereiche eingeteilt sein, in denen unterschiedliche Monomodewellen aufgrund unterschiedlicher Geometrien der Bereiche als Hohlraumresonator ausbreitungsfähig sind. Abhängig von der Geometrie der jeweiligen Bereiche kann dann in jedem Bereich eine andere Energieverteilung des Mikrowellenfeldes für das Profil des Werkstücks vorgesehen sein. Ist die Geometrie der Bereiche durch Verschieben von Wänden (ggf. durch einen Motor) eines Bereichs des Monomode-Applikators oder durch Veränderung seines Durchmessers veränderbar, ist sogar die Monomode-Welle im laufenden Betrieb veränderbar. So sind in Figur 4 Hohlraumresonatoren gezeigt, die sich in einen Mittelbereich 16 und zwei einander gleichende Seitenbereiche 17a, 17b aufteilen, wobei im Mittelbereich 16 und in den Seitenbereichen 17a, 17b unterschiedliche Monomodewellen ausbreitungsfähig sind. Die Mikrowellen werden dabei von dem Mittelbereich 16 in die Seitenbereiche 17a, 17b eingekoppelt.

Bei der Ausführungsform gemäß Figur 5 weisen die Hohlraumresonatoren 3 unterschiedliche Bereiche 16, 17, 18 auf, die von dem Werkstück 3 nacheinander durchlaufen werden. Die Seitenbereiche 17, 18 werden dabei wie in der Ausführungsform gemäß Figur 4 von dem Mittelbereich 16 gespeist.

Bei sämtlichen quer durchlaufenen Hohlraumresonatoren der Figuren 3, 4 und 5, sind an den Werkstücköffnungen 20a, 20b außen am Monomode-Applikator Rohrvorsätze 21a, 21b vorgesehen, die der Abschirmung des Hohlraumresonators dienen. Sie verhindern, dass Mikrowellen aus dem Hohlraumresonator in die Kavität 2 entweichen und dort möglicherweise Schäden oder unerwünschte Einflüsse auf andere Bauteile verursachen oder mit anderen Mikrowellen in der Kavität interferieren.

## Patentansprüche

1. Vorrichtung (1) zum Vernetzen von einem oder mehreren in einem Werkstück (3) enthaltenen, insbesondere polaren, Werkstoffen, insbesondere von Kautschuk, mittels Mikrowellen, mit mindestens einer Mikrowellenquelle und mindestens einem Monomode-Applikator (4), in den Mikrowellen der Mikrowellenquelle eingekoppelt werden können, wobei der mindestens eine Monomode-Applikator (4) eine erste Öffnung (20a) zum Einführen des Werkstücks (3) und eine zweite Öffnung (20b) zum Herausführen des Werkstücks (3) aufweist, so dass das Werkstück (3) durch den Monomode-Applikator (4) hindurchgeführt werden kann, **dadurch gekennzeichnet, dass** an der ersten Öffnung (20a) und der zweiten Öffnung (20b) eine Mikrowellenfalle vorgesehen ist.

2. Vorrichtung (1) nach Anspruch 1, **dadurch gekennzeichnet, dass** der mindestens eine Monomode-Applikator (4) ein Hohlleiter ist, der zur Leitung monomodaler Mikrowellen geeignet ist.

3. Vorrichtung (1) nach Anspruch 1, **dadurch gekennzeichnet, dass** der mindestens eine Monomode-Applikator (4) ein Streifenleiter ist, der zur Leitung monomodaler Mikrowellen geeignet ist.

4. Vorrichtung (1) nach Anspruch 1, **dadurch gekennzeichnet, dass** der mindestens eine Monomode-Applikator (4) ein Hohlraumresonator ist, in dem sich eine monomodale stehende Mikrowelle ausbilden kann.

5. Vorrichtung (1) nach einem der vorhergehenden Ansprüche, **dadurch gekennzeichnet, dass** die erste Öffnung (20a) verschließbar ist.

6. Vorrichtung (1) nach einem der vorhergehenden Ansprüche, **dadurch gekennzeichnet, dass** die Transportrichtung (T) des Werkstücks (3) quer oder parallel zur Ausbreitungsrichtung (A) der Mikrowellen verläuft.

**7.** Vorrichtung (1) nach einem der vorhergehenden Ansprüche, **dadurch gekennzeichnet, dass** mehrere Monomode-Applikatoren (4a, 4b, 4c, 4d) in Transportrichtung (T) des Werkstücks (3) hintereinander angeordnet sind und von dem Werkstück (3) durchlaufen werden.

**8.** Vorrichtung (1) nach einem der vorhergehenden Ansprüche, **dadurch gekennzeichnet, dass** der mindestens eine Monomode-Applikator (4) insbesondere in einem Einkopplungsbereich der Mikrowelle eine Messvorrichtung zum Messen der Energiedichte reflektierter Mikrowellen und eine Abstimmvorrichtung zum Einstellen von Eigenschaften einer durch eine Mikrowellenquelle erzeugten Mikrowelle aufweist, wobei die Messvorrichtung und die Abstimmvorrichtung Bestandteile eines Regelkreises zum Einstellen einer minimalen Energiedichte der reflektierten Mikrowellen sind.

**9.** Vorrichtung (1) nach einem der vorhergehenden Ansprüche, **dadurch gekennzeichnet, dass** der mindestens eine Monomode-Applikator (4) mehrere Bereiche (16, 17, 18) mit unterschiedlichen Geometrien aufweist, wobei in mindestens zwei dieser Bereiche (16, 17, 18) unterschiedliche monomodale Mikrowellen ausbreitungsfähig sind.

**10.** Vorrichtung (1) nach einem der vorhergehenden Ansprüche, **dadurch gekennzeichnet, dass** die Vorrichtung (1) eine Kavität (2) aufweist, insbesondere eine Heißgaskavität.

**11.** Vorrichtung (1) nach einem der vorhergehenden Ansprüche, **dadurch gekennzeichnet, dass** der mindestens eine Monomode-Applikator (4) mehrteilig ist und die Teile insbesondere zum Einführen oder Einlegen eines Werkstücks (3) voneinander getrennt werden können.

**12.** Vorrichtung (1) nach Anspruch 10 und 11, **dadurch gekennzeichnet, dass** die Kavität (2) einen Deckel aufweist und ein insbesondere oberer Teil des Monomode-Applikators (4) mit dem Deckel verbunden ist.

**13.** Vorrichtung (1) nach einem der vorherigen Ansprüche, **dadurch gekennzeichnet, dass** die Mikrowellenfalle ein Rohrvorsatz und/oder ein Hohlkörper ist, der vorzugsweise, aber nicht zwingend, mit einem Mikrowellen absorbierenden Material versehen ist oder aus einem solchen besteht.

**14.** Verwendung einer Vorrichtung nach einem der Ansprüche 1 bis 13 zum Vernetzen von einem oder mehreren in einem Werkstück (3) enthaltenen Werkstoffen mittels Mikrowellen, wobei der oder die Werkstoffe ein oder mehrere Elastomere sind, die insbesondere ausgewählt sind aus der Gruppe von Naturkautschuken, Polybutadienkautschuken, Styrol-Butadien-Kautschuken, Acrylnitril-Butadien-Kautschuken, Chloroprenkautschuken, Isoprenkautschuken, Butylkautschuken, Ethylen-Propylen-Kautschuken, Polysulfidkautschuken, Polyurethankautschuken, Fluorkautschuken, Chlorsulfonylpolyethylen-Kautschuken und Silikonkautschuken einschließlich kalt- und heißvernetzenden Silikonkautschuken sowie Flüssigsilikonkautschuk.

**Claims**

**1.** Device (1) for cross-linking one or more materials, in particular polar materials, in particular rubber, contained in a workpiece (3) by means of microwaves, having at least one microwave source and at least one single-mode applicator (4) into which microwaves from the microwave source can be coupled, wherein the at least one single-mode applicator (4) has a first opening (20a) for introducing the workpiece (3) and a second opening (20b) for guiding the workpiece (3) out, so that the workpiece (3) can be guided through the single-mode applicator (4), **characterized in that** a microwave trap is provided at the first opening (20a) and the second opening (20b).

**2.** Device (1) according to claim 1, **characterized in that** the at least one single-mode applicator (4) is a waveguide which is suitable for conducting single-mode microwaves.

**3.** Device (1) according to claim 1, **characterized in that** the at least one single-mode applicator (4) is a strip conductor suitable for conducting single-mode microwaves.

**4.** Device (1) according to claim 1, **characterized in that** the at least one single-mode applicator (4) is a cavity resonator in which a single-mode standing microwave can form.

**5.** Device (1) according to one of the preceding claims, **characterized in that** the first opening (20a) is closable.

**6.** Device (1) according to one of the preceding claims, **characterized in that** the transport direction (T) of the workpiece (3) runs transversely or parallel to the propagation direction (A) of the microwaves.

**7.** Device (1) according to one of the preceding claims, **characterized in that** a plurality of single-mode applicators (4a, 4b, 4c, 4d) are arranged one behind the other in the transport direction (T) of the workpiece (3) and are passed through by the workpiece (3).

**8.** Device (1) according to one of the preceding claims, **characterized in that** the at least one single-mode applicator (4) has, in particular in a coupling-in region of the microwave, a measuring device for measuring the energy density of reflected microwaves and a tuning device for adjusting properties of a microwave generated by a microwave source, the measuring device and the tuning device being components of a control loop for adjusting a minimum energy density of the reflected microwaves.

**9.** Device (1) according to one of the preceding claims, **characterized in that** the at least one single-mode applicator (4) has a plurality of regions (16, 17, 18) with different geometries, wherein different single-mode microwaves are capable of propagating in at least two of these regions (16, 17, 18).

**10.** Device (1) according to one of the preceding claims, **characterized in that** the device (1) has a cavity (2), in particular a hot gas cavity.

**11.** Device (1) according to one of the preceding claims, **characterized in that** the at least one single-mode applicator (4) is multi-part and the parts can be separated from one another, in particular for inserting or inserting a workpiece (3).

**12.** Device (1) according to claims 10 and 11, **characterized in that** the cavity (2) has a lid and a particularly upper part of the monomode applicator (4) is connected to the lid.

**13.** Device (1) according to one of the preceding claims, **characterized in that** the microwave trap is a tubular attachment and/or a hollow body which is preferably, but not necessarily, provided with or consists of a microwave-absorbing material.

**14.** Use of a device according to any one of claims 1 to 13 for cross-linking one or more materials comprised in a workpiece (3) by means of microwaves, wherein the material or materials are one or more elastomers selected in particular from the group of natural rubbers, polybutadiene rubbers, styrene-butadiene rubbers, acrylonitrile-butadiene rubbers, chloroprene rubbers, isoprene rubbers, butyl rubbers, ethylene-propylene rubbers, polysulfide rubbers, polyurethane rubbers, fluoro rubbers, chlorosulfonyl polyethylene rubbers and silicone rubbers including cold and hot-curing silicone rubbers and liquid silicone rubbers.

## Revendications

**1.** Appareil (1) destiné à réticuler une ou plusieurs substances, en particulier des substances polaires, en particulier du caoutchouc, contenues dans une pièce (3) à l'aide de micro-ondes, ayant au moins une source de micro-ondes et au moins un applicateur à un seul mode (4) auquel les micro-ondes en provenance de la source de micro-ondes peuvent être couplées, dans lequel l'au moins un applicateur à un seul mode (4) possède une première ouverture (20a) destinée à introduire la pièce (3) et une deuxième ouverture (20b) destinée à guider la pièce (3) vers l'extérieur, de sorte que la pièce (3) puisse être guidée à travers l'applicateur à un seul mode (4), **caractérisé en ce qu'**un piège à micro-ondes est prévu au niveau de la première ouverture (20a) et de la deuxième ouverture (20b).

**2.** Dispositif (1) selon la revendication 1, **caractérisé en ce que** l'au moins un applicateur à un seul mode (4) est un guide d'ondes qui convient pour conduire des micro-ondes à un seul mode.

**3.** Dispositif (1) selon la revendication 1, **caractérisé en ce que** l'au moins un applicateur à un seul mode (4) est un guide d'ondes à rubans qui convient pour conduire des micro-ondes à un seul mode.

**4.** Dispositif (1) selon la revendication 1, **caractérisé en ce que** l'au moins un applicateur à un seul mode (4) est une cavité résonante dans laquelle une micro-onde permanente à un seul mode peut se former.

**5.** Dispositif (1) selon l'une des revendications précédentes, **caractérisé en ce que** la première ouverture (20a) peut être fermée.

**6.** Dispositif (1) selon l'une des revendications précédentes, **caractérisé en ce que** la direction de transport (T) de la pièce (3) est transversale ou parallèle par rapport à la direction de propagation (A) des micro-ondes.

**7.** Dispositif (1) selon l'une des revendications précédentes, **caractérisé en ce que** plusieurs applicateurs à un seul mode (4a, 4b, 4c, 4d) sont prévus les uns derrière les autres dans la direction de transport (T) de la pièce (3) et sont traversés par la pièce (3).

**8.** Dispositif (1) selon l'une des revendications précédentes, **caractérisé en ce que** l'au moins un applicateur à un seul mode (4) possède, en particulier dans une zone de couplage des micro-ondes, un dispositif de mesure destiné à mesurer la densité énergétique des micro-ondes réfléchies et un dispositif de réglage destiné à ajuster les propriétés d'une micro-ondes générée par une source de micro-ondes, le dispositif de mesure et le dispositif de réglage étant des composants d'une boucle de commande destiné à ajuster une densité énergétique minimale des micro-ondes réfléchies.

**9.** Dispositif (1) selon l'une des revendications précédentes, **caractérisé en ce que** l'au moins un applicateur à un seul mode (4) possède une pluralité de zones (16, 17, 18) avec différentes géométries, dans lequel les différentes micro-ondes à un seul mode sont capables de se propager dans au moins deux de ces zones (16, 17, 18).

**10.** Dispositif (1) selon l'une des revendications précédentes, **caractérisé en ce que** le dispositif (1) possède une cavité (2), en particulier une cavité de gaz chaud.

**11.** Dispositif (1) selon l'une des revendications précédentes, **caractérisé en ce que** l'au moins un applicateur à un seul mode (4) est en plusieurs parties et les parties peuvent être séparées les unes des autres, en particulier pour l'insertion ou l'insertion d'une pièce (3).

**12.** Dispositif (1) selon les revendications 10 et 11, **caractérisé en ce que** la cavité (2) possède un couvercle et une partie particulièrement supérieure de l'applicateur à un seul mode (4) est reliée au couvercle.

**13.** Dispositif (1) selon l'une des revendications précédentes, **caractérisé en ce que** le piège à micro-ondes est un accessoire tubulaire et/ou un corps creux qui est de préférence, mais pas nécessairement, équipé de ou qui se compose d'un matériau qui absorbe les micro-ondes.

**14.** Utilisation d'un dispositif selon l'une des revendications 1 à 13 pour la réticulation d'un ou plusieurs matériaux contenus dans une pièce (3) au moyen de micro-ondes, dans lequel le ou les matériaux sont un ou plusieurs élastomères qui sont plus particulièrement sélectionnés dans le groupe constitué de caoutchoucs naturels, de caoutchoucs e types polybutadiènes, de caoutchoucs de types styrènes-butadiènes, des caoutchoucs d'acrylonitrile-butadiène, des caoutchoucs de chloroprène, des caoutchoucs d'isoprène, des caoutchoucs butyliques, des caoutchoucs éthylène-propylène, des caoutchoucs polysulfidiques, des caoutchoucs de polyuréthane, des fluoro-caoutchoucs, des caoutchoucs de polyéthylène chlorosulfoné et des caoutchoucs de silicone, y compris des caoutchoucs de silicone polymérisables à froid et à chaud et des caoutchoucs de silicone liquides.

**Figur 1**

**Figur 2**

**Figur 3**

**Figur 4**

**Figur 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4275283 A
- JP 08108434 A
- FR 2548507 A1
- EP 1205724 A2